Europäisches Patentamt

European Patent Office

Office européen des brevets

(19)

(11) Numéro de publication: **0 376 833**

**A1**

(12) # DEMANDE DE BREVET EUROPEEN

(21) Numéro de dépôt: **89403637.5**

(22) Date de dépôt: **22.12.89**

(51) Int. Cl.5: **B65G 1/04, B66F 9/14**

(30) Priorité: **28.12.88 FR 8817545**

(43) Date de publication de la demande:
**04.07.90 Bulletin 90/27**

(84) Etats contractants désignés:
**BE CH DE ES FR GB IT LI SE**

(71) Demandeur: **A 5 SYSTEMES Société à Responsabilité Limitée**
**Z.I. du Puy Nardon**
**F-85290 Mortagne sur Sevre(FR)**

(72) Inventeur: **Frouin, Gilbert**
**13 rue de Milan**
**F-49300 Cholet(FR)**
Inventeur: **Cheneau, Gilles**
**Les Havenaux**
**F-49360 Yzernay(FR)**

(74) Mandataire: **Phélip, Bruno et al**
**c/o Cabinet Harlé & Phélip 21, rue de La Rochefoucauld**
**F-75009 Paris(FR)**

(54) **Chariot manipulateur de nacelles pour installation de stockage automatique, nacelle de rangement et installation de stockage.**

(57) L'invention concerne un chariot destiné à l'extraction et au rangement de nacelles dans les installations de stockage automatique.

Ce chariot (1) est du type comportant des moyens d'accrochage qui coopèrent avec des moyens de préhension (22) aménagés sur les nacelles (4). Ces moyens d'accrochage sont entraînés par un système à deux chaînes sans fin (12, 13) synchronisées, disposées chacune dans un plan vertical, de part et d'autre du plan médian de la nacelle et au-delà de son gabarit frontal. Ces moyens d'accrochage sont en forme de barres (20) 21) disposées horizontalement entre les deux chaînes (12, 13), sur une ligne tendue entre deux maillons en vis à vis sur chacune d'elles ; ils se situent, en position active d'extraction ou de rangement, dans le plan de traction des brins supérieurs (12a et 13a,) lequel plan de traction est parallèle au plan de glissement.

fig. 1

# CHARIOT MANIPULATEUR DE NACELLES POUR INSTALLATION DE STOCKAGE AUTOMATIQUE, NACELLE DE RANGEMENT ET INSTALLATION DE STOCKAGE

L'invention concerne le domaine des installations ou magasins de stockage automatique à rayonnages hauts ; elle concerne plus particulièrement un chariot destiné à l'extraction et au rangement des nacelles dans de telles installations. Elle concerne également une forme particulière de nacelles de rangement et l'installation de stockage comprenant lesdites nacelles.

Dans le domaine de la manutention et en particulier des dispositifs de rangement automatisés de palettes ou porte-charges appelés nacelles, dans des rayonnages verticaux, il est connu de prévoir une plateforme ou chariot mobile, pour réaliser la manipulation desdites nacelles et leur déplacement jusqu'au poste de travail.

Ce chariot, mobile entre deux rayonnages, a la possibilité de se placer face à une nacelle précise, de réaliser son extraction hors du rayonnage, de la stabiliser et d'assurer son déplacement vertical et/ou horizontal pour la mise à niveau au poste de travail ou son contenu pourra être traité. Par la suite le chariot peut revenir face au compartiment de stockage de la nacelle, dans le rayonnage, pour permettre le rangement automatique de cette dernière.

Un tel dispositif est par exemple décrit dans le document EP-A-0 253 775. Ce document présente un dispositif pour extraire et ranger des porte-charges, notamment dans les magasins de stockage automatique. Le chariot d'extraction est mobile horizontalement ; il a la possibilité de se positionner automatiquement face à des nacelles disposées dans un rayonnage, pour réaliser leur extraction Les moyens d'extraction de la nacelle consistent en deux chaînes sans fin motorisées, supportant des éléments crochetés destinés à coopérer avec une poignée centrale prévue sur la nacelle. Les deux chaînes sans fin sont disposées verticalement, parallèlement l'une à l'autre, dans le sens de déplacement des nacelles. Elles sont positionnées sensiblement au niveau de l'axe central du chariot et supportent chacune une partie du crochet tracteur pour assurer un positionnement de ce dernier en permanence parallèle à lui-même sur l'ensemble de son circuit. Les deux chaînes synchronisées sont entraînées dans un sens ou dans l'autre pour réaliser soit l'extraction, soit le rangement des porte-charges.

Ce dispositif, relativement complexe, est particulièrement adapté à la manipulation de charges légères, par exemple pour le stockage de documents. Le crochet unique réalise la manipulation des nacelles par un seul point de traction. Dans le cas de charges importantes, réparties sur de grandes longueurs et mal équilibrées, un tel dispositif ne peut éviter à la nacelle de pivoter et de se mettre en travers pour s'arc-bouter dans ses glissières. On constate alors des risques de blocage, et des efforts importants peuvent être soumis à l'ensemble du dispositif.

Dans le cas de lourdes charges à tracter ou de contraintes accidentelles excessives, le système à crochets tel que proposé dans ce document EP-A-0 253 775 peut se détériorer par une ouverture ou rupture desdits crochets par exemple.

Le document EP-A-0 136 189 décrit un autre dispositif pour la préhension de récipients, tels que des bacs de rangement.

Dans ce mode de réalisation particulier, on trouve deux chaînes sans fin disposées horizontalement et symétriquement par rapport à l'axe médian du chariot et de la nacelle à manipuler. Chaque chaîne est munie de deux doigts, l'un agissant par traction et l'autre par poussée sur la nacelle ; ces doigts coopèrent avec deux poignées disposées l'une sur sur la face frontale et l'autre sur la face arrière de ladite nacelle. Les doigts de traction sont fixes sur les chaines, en porte-à-faux, au-dessus d'elles et dirigés verticalement.

Dans le cas ou l'on doit tirer des charges importantes, ces doigts de traction peuvent s'ouvrir et, malgré la synchronisation des deux chaines, provoquer un décalage conduisant à un arc-boutement de la nacelle dans son compartiment.

On connaît également un autre type de dispositif, décrit dans le document US-A-4 358 239. Ce dispositif est destiné à l'extraction et au rangement de porte-charges dans une installation de stockage à rayonnages. Le chariot manipulateur desdites charges comporte deux paires de chaînes sans fin, disposées verticalement, de part et d'autre de l'axe médian de la nacelle à manipuler. Chaque paire de chaînes se situe dans l'encombrement frontal de la nacelle ; elles maintiennent des éléments support d'un profilé transversal, de façon à assurer un positionnement de ce dernier toujours parallèle à lui-même. Le profilé transversal sert d'organe d'accrochage des poignées de manipulation disposées sur la nacelle ; en cours de manipulation, il s'étend au-dessus du plan de traction, en porte-à-faux.

Là encore, dans le cas de manipulation de charges très lourdes, l'organe d'accrochage transversal peut se cintrer et bloquer la nacelle dans son compartiment.

L'invention a pour but de pallier à l'ensemble de ces inconvénients ; elle a tout d'abord pour objet un chariot manipulateur de nacelles de conception relativement simple, qui permet la manipulation, sans aucun problème, de charges très lourdes (supérieures à 500 Kgs), même mal réparties sur la longueur des nacelles. Celles-ci peuvent avoir de grandes dimensions, par exemple 1 m de profondeur, 7 m de largeur et une hauteur de quelques cm.

Ce chariot est du type comportant des moyens de guidage et des moyens d'accrochage qui coopèrent avec des moyens de préhension aménagés sur les nacelles. Ces moyens d'accrochage sont entraînés par un système à chaînes sans fin synchronisées, disposées symétriquement et dans un plan vertical, de part et d'autre du plan médian de la nacelle, pour réaliser son extraction et son rangement.

Selon l'invention, ce chariot comporte :
- deux chaînes sans fin disposées chacune latéralement, au-delà du gabarit frontal de la nacelle,
- des moyens d'accrochage en forme de barre, disposés horizontalement entre les deux chaînes, solidaires desdites chaînes sur une ligne tendue entre deux maillons en vis à vis sur chacune d'elles ; ces moyens d'accrochage se chariot manipulateur.

Toujours selon l'invention, la nacelle comporte, de chaque côté, un ergot de verrouillage situé dans la partie médiane de ladite nacelle, lequel ergot est supporté par deux leviers de commande articulés. Les leviers s'étendent, l'un vers la face avant et l'autre vers la face arrière de la nacelle, de telle sorte qu'ils puissent être actionnés par les barres d'accrochage, lorsqu'elles pénètrent ou sortent des poignées de préhension des nacelles.

L'invention concerne également l'installation de stockage pour les nacelles munies de moyens de verrouillage. Cette installation comporte, au niveau des rails de guidage, des moyens en forme d'encoches qui coopèrent avec des ergots solidaires des nacelles. Ces encoches permettent le blocage desdits ergots et le verrouillage desdites nacelles sur les rails de guidage.

Mais l'invention sera encore illustrée, sans être aucunement limitée, par la description suivante d'un mode de réalisation particulier, donné à titre d'exemple et représenté sur les dessins annexés dans lesquels :

- la figure 1 représente, en coupe selon 1-1, le chariot de manipulation selon l'invention, sans nacelle, disposé entre deux rayonnages dans lesquels sont stockées les nacelles ;

- la figure 2 représente ce chariot, en coupe selon 2-2 et supportant une nacelle de rangement,

- les figures 3a, 3b, 3c montrent, en trois étapes, la manipulation des nacelles par le chariot extracteur selon l'invention, lequel est représenté de façon schématisée,

- la figure 4 est une vue agrandie et partielle selon deux coupes 4-4, d'un mode de réalisation particulier dans lequel les nacelles sont munies de galets et de moyens permettant de les verrouiller dans leur rayonnage,

- les figures 5, 6 et 7 montrent le principe de fonctionnement des moyens de verrouillage des nacelles.

Le chariot manipulateur 1 est muni de moyens usuels non représentés assurant, par un système de commande classique, son déplacement devant un rayonnage ou dans un situent, en position active, dans le plan de traction des brins supérieurs desdites chaînes. Les moyens d'accrochage en forme de barre constituent un élément de traction maintenu à ses deux extrémités, au niveau des chaînes et disposé dans le plan de traction, toujours perpendiculairement au sens de déplacement des nacelles.

Toujours selon l'invention, le chariot est muni de deux barres de traction horizontales qui coopèrent chacune respectivement avec les moyens de préhension disposés à l'avant et à l'arrière de la nacelle. Ces barres peuvent être munies de bagues de roulement en plastique, acier ou autre matière, à leur niveau d'accrochage sur ces moyens de préhension.

Selon une autre disposition, les deux barres sont positionnées sur les chaînes de façon à permettre, d'une part, le blocage et le centrage de la nacelle sur le chariot et, d'autre part, le déplacement en continu de la nacelle, d'un côté à l'autre du charlot, dans des rayonnages disposés de part et d'autre dudit chariot.

Selon une disposition particulière, les brins supérieurs horizontaux des chaînes se situent latéralement, dans un plan situé au-dessus du fond de la nacelle à prendre en charge.

L'invention a également pour objet la nacelle destinée à l'installation de stockage comprenant un chariot tel que décrit précédemment.

Selon l'invention, cette nacelle comporte des moyens de préhension en forme de deux poignées disposées sur chacune de ses faces avant et arrière, dans l'encombrement de ces dernières.

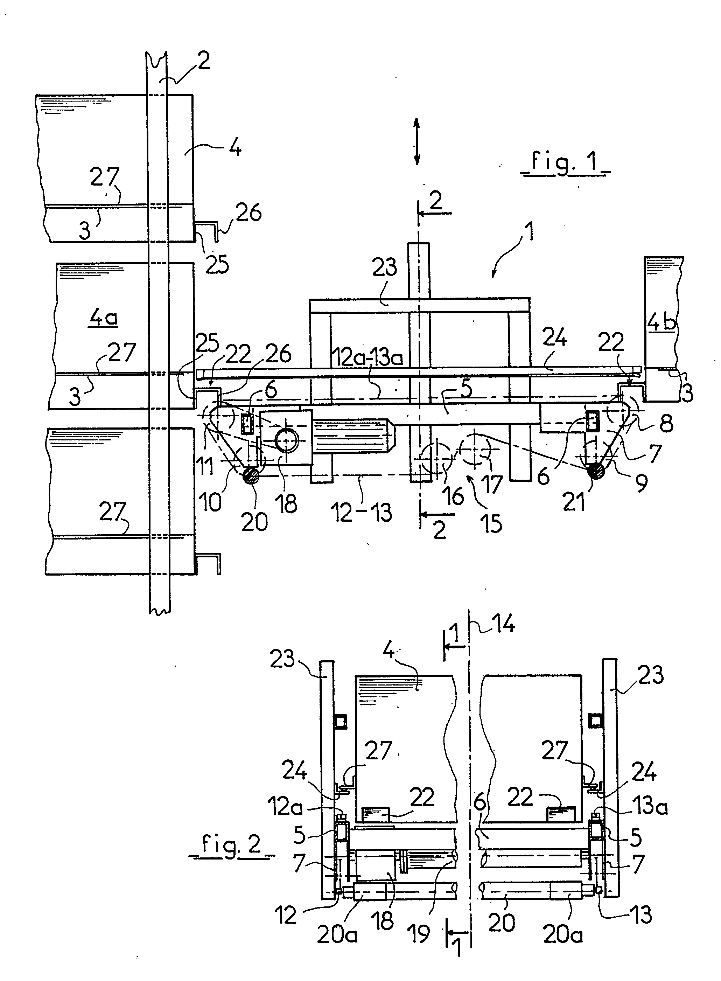

Selon un mode de réalisation particulier, la nacelle est équipée de galets destinés à faciliter son déplacement ; elle comporte alors également des moyens de verrouillage dans le magasin de stockage. Dans un mode de réalisation particulier, ces moyens de verrouillage latéraux sont en forme d'ergots supportés par au moins un levier de commande, articulé. Le levier de commande est lui-même actionné par les moyens d'accrochage en forme de barres du couloir constitué de deux rayonnages en vis à vis. Ces rayonnages, représentés uniquement partiellement, figure 1, consistent en un bâti 2 supportant des rails de guidage ou glissières 3 qui définissent des compartiments de stockage pour les nacelles de rangement 4.

La figure 1 représente le chariot selon l'invention, positionné face aux nacelles 4a et 4b et prêt à entraîner l'une ou l'autre. Ce chariot, représenté également figure 2 avec une nacelle 4 en charge, consiste en un bâti sensiblement rectangulaire, constitué de deux poutres latérales 5, disposées parallèlement aux glissières 3 des rayonnages et reliées entre elles par deux poutres transversales 6. Ces dernières ont une dimension supérieure à la largeur des nacelles 4 ; les poutres 5 ont une longueur sensiblement supérieure à la longueur de ces nacelles.

Chaque poutre 5 est munie à ses extrémités d'un support 7 en forme de chape pour le maintien de pignons 8, 9, 10, 11 destinés au guidage de deux chaînes latérales à maillons 12, 13. Le chariot 1 horizontal est symétrique par rapport à son plan médian longitudinal 14.

Les deux jeux de pignons 8, 9, 10, 11, disposés de part et d'autre de ce plan de symétrie 14, guident les chaînes sans fin 12 et 13 dans un plan vertical et, comme on peut le voir figure 1, selon une course sensiblement trapézoïdale. Leurs deux brins supérieurs 12a, 13a définissent la grande base du trapèze et sont situés dans un plan horizontal entre les deux jeux de pignons 8 et 11.

Sous ce plan horizontal, le chariot 1 est muni d'un dispositif 15 de régulation de la tension desdites chaînes 12 et 13. Ce dispositif consiste, pour chaque chaîne, en une association de deux galets 16 et 17, dont la position peut être modifiée pour faire varier la forme de la chicane réalisée sur le brin inférieur des chaînes 12 et 13 et faire varier ainsi leur tension.

Les chaînes sans fin 12 et 13 sont en permanence parallèles et disposées symétriquement de part et d'autre du plan médian 14 ; elles sont de plus espacées d'une distance superieure à la largeur des nacelles 4 ; elles se situent en-dehors du gabarit frontal desdites nacelles. L'entraînement des deux chaînes 12 et 13 s'effectue au moyen d'un moto-réducteur 18 disposé à proximité de la chaîne 12, figure 2 ; un arbre d'entrainement 19 est interposé entre ledit moto-réducteur 18 et la chaîne 13. Cet entraînement s'effectue par exemple au niveau des pignons 11 par le biais d'une transmission esquissée figure 1.

Le mouvement des deux chaînes 12 et 13 est synchronisé, et elles peuvent tourner dans les deux sens.

Deux barres cylindriques transversales 20 et 21 relient les deux chaînes 12 et 13. Ces barres sont centrées sur l'axe de deux maillons de chaînes en vis à vis ; étant donné la synchronisation des deux chaînes 12 et 13, elles sont en permanence parallèles aux axes de rotation des pignons de guidage 8, 9, 10, 11 et perpendiculaires au sens de déplacement desdites chaînes 12 et 13. Ces deux barres cylindriques 20 et 21 constituent les moyens d'accrochage du chariot et sont destinées à extraire et ranger les nacelles 4.

La motorisation synchronisée des chaînes 12 et 13 assure le déplacement, dans un sens ou dans l'autre, des barres d'accrochage 20 et 21. Ces barres coopèrent avec des moyens de préhension en forme de poignées 22 qui sont prévues dans l'encombrement des nacelles, en bordure de leurs faces frontale et arrière.

Les barres 20, 21 sont munies de bagues de roulement 20a, au niveau de leur accrochage sur les poignées 22 des nacelles. Ces bagues 20a sont réalisées en plastique, acier ou autre matière ; elles sont montées sur les barres 20 et 21 pour éviter, grâce à leur roulement, un éventuel coincement ou arc-boutement des nacelles et faciliter leur introduction dans les poignées 22.

Les longerons 5 du chariot manipulateur 1 supportent chacun un cadre latéral 23 s'étendant vers le haut ; ce dernier soutient une glissière longitudinale 24 qui s'étend sensiblement sur toute la longueur dudit chariot 1 et ces moyens de glissement 24 sont destinés à prolonger les glissières 3 du magasin de stockage, en position active de manipulation. Les glissières latérales 24 définissent un plan de glissement qui est, en permanence, parallèle au plan défini par les glissières 3 dudit magasin ; elles sont positionnées au-dessus du plan défini par les brins supérieures 12a et 13a des chaînes 12 et 13.

Le chariot manipulateur 1 assure deux fonctions : d'une part l'extraction et le rangement des nacelles 4 dans leur compartiment de stockage, d'autre part le déplacement de ces nacelles 4 jusqu'au poste de travail ou à leur niveau de rangement.

Dans le mode de réalisation représenté sur les différentes figures, le chariot 1 a la possibilité de manipuler les nacelles 4a ou 4b de deux stocks en vis à vis.

Les moyens de préhension des nacelles 4 consistent en deux poignées latérales 22 en forme de U renversé, disposées dans l'encombrement de la face avant et de la face arrière. Ces poignées 22, en saillie, comprennent une ouverture inférieure, disposée entre une aile interne 25 en contact avec les faces frontale et arrière des nacelles et une aile externe 26, sensiblement verticale.

Chaque nacelle 4 est munie, latéralement et au-dessus des poignées 22, de deux guides longitudinaux 27 destinés à prendre appui sur les glissières 3 et 24. Ces guides 27 sont disposés horizontalement sur toute la longueur desdites nacelles et ils leur servent de moyen de portage.

Dans son couloir de déplacement, le chariot définit un encombrement tel qu'il puisse assurer, de chaque côté, la préhension des poignées 22, par les moyens d'accrochage 20 ou 21. Ainsi, les chaînes 12 et 13 sont disposées de telle sorte que les barres 20, 21 aient la possibilité d'accrocher les moyens de préhension 22 des nacelles.

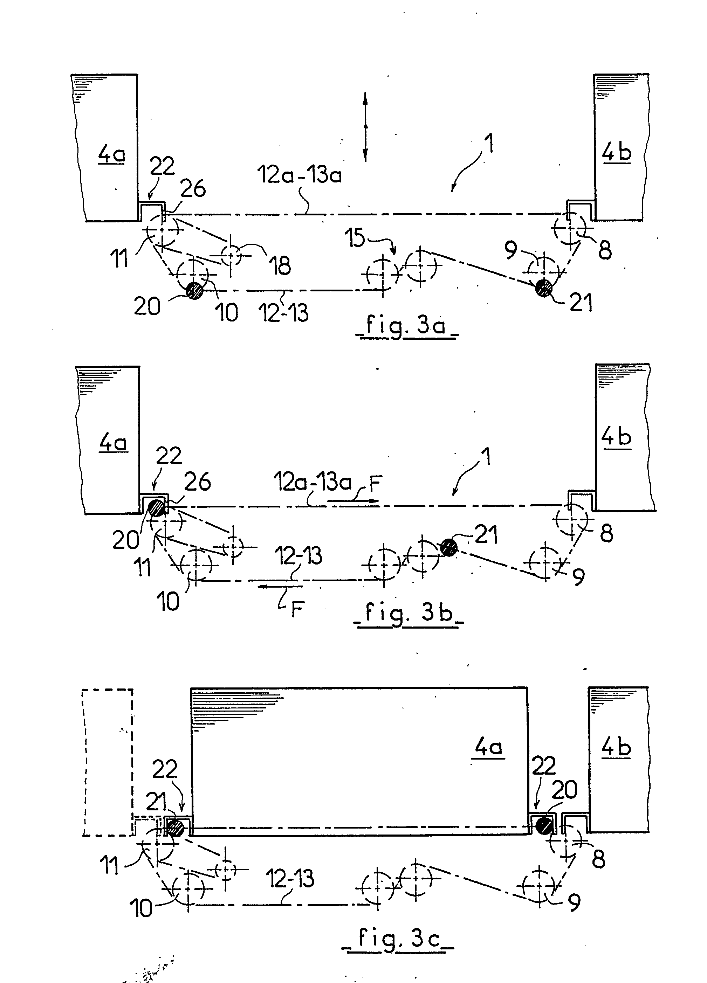

La figure 3a montre le chariot 1 en position de déplacement vertical entre les deux rangées de nacelles 4a et 4b.

Etant donné les dispositions constructives particulières du chariot selon l'invention, l'encombrement longitudinal de ce dernier doit s'étendre au-delà des ailes verticales 26 des poignées 22 des nacelles 4a et 4b en stock. Dans le cas présent cet encombrement longitudinal correspond à l'entraxe des galets 8 et 11, plus deux fois leur rayon ; cette longueur est comprise entre la distance séparant les deux ailes externes 26 des nacelles 4a et 4b et celle séparant les deux ailes internes 25.

En position de déplacement, les barres 20 et 21 doivent être immobilisées de façon à ne pas interférer avec les poignées 22 ; dans le cas présent elles sont placées sous le plan horizontal défini par les brins supérieurs 12a et 13a des chaînes 12 et 13, sensiblement au niveau des galets de guidage 9 et 10. Elles ont un entraxe correspondant sensiblement à celui des poutres transversales 6 ; cet entraxe est nettement inférieur à la distance séparant les deux ailes externes 26 des nacelles 4a et 4b. Dans le cas ou l'axe médian du chariot est positionné en correspondance avec l'axe médian des nacelles 4, son déplacement vertical ne pose pas de problème étant donné que la largeur des nacelles est inférieure à la distance séparant les deux chaînes 12 et 13.

La figure 3b montre le chariot 1 face à la nacelle 4a, en position active de manipulation.

Dans cette position le plan médian 14 du chariot 1 correspond au plan médian de la nacelle. Les chaînes latérales 12 et 13 sont disposées dans deux plans verticaux, de part et d'autre du gabarit frontal de la nacelle 4 ; leurs brins supérieurs 12a et 13a forment un plan horizontal situé sensiblement au-dessus du fond de la nacelle. Les plans de glissement horizontaux déterminés d'une part, par les glissières 3 et, d'autre part, par les glissières 24, sont sensiblement en correspondance.

Le chariot 1 est positionné de façon à permettre l'engagement de la barre cylindrique 20 dans l'ouverture inférieure des poignées 22. Ces dernières ont une largeur, correspondant à la distance séparant les ailes verticales 25 et 26, sensiblement supérieure au diamètre des barres cylindriques 20 et 21. La rotation du moteur 18 entraîne les chaînes de transmission dans le sens indiqué par les flèches F. La barre cylindrique 20 tourne autour du pignon 11, pénètre dans la poignée 22 et arrive en contact avec son aile externe 26 ; elle se situe alors en position active, dans le plan de traction horizontal défini par les brins supérieurs 12a et 13a des chaînes 12 et 13 où elle aura un déplacement linéaire. Pour réaliser cette opération, l'axe du galet 11 se situe sensiblement à la verticale de l'aile externe 26 ; le rayon de ce galet est légèrement inférieur à la largeur de la poignée de préhension 22 et le plan de traction passe sensiblement par le milieu de l'aile externe 26. Le mouvement des chaînes latérales 12 et 13, liées au système de motorisation 18, a la possibilité, dans cette position, de tirer la nacelle 4a par l'intermédiaire de la barre cylindrique 20 qui est engagée dans les deux poignées de préhension latérales 22. La nacelle 4a coulisse alors sur les glissières 3 du rayonnage et est prise en charge par les glissières 24 du chariot 1, constituant son plan de glissement. Au cours de ce déplacement la nacelle 4a décrit un trajet sensiblement rectiligne. L'effort de traction est réalisé par la barre cylindrique 20, sur deux surfaces de contact correspondant à la partie interne des ailes 26 ; cet effort s'effectue dans le plan de traction défini par les brins supérieurs des chaînes 12 et 13.

Comme on peut le voir figure 3c, lorsque la nacelle 4a est totalement extraite la seconde barre cylindrique 21 vient s'engager dans les poignées de préhension 22 disposées sur la face arrière de ladite nacelle. Les deux barres parallèles 20 et 21 sont espacées sur les chaînes 12 et 13 de façon à ce que, dans cette position, elles viennent respectivement et sensiblement en contact avec les ailes externes 26 des poignées 22 avant et arrière. Cette disposition particulière permet de bloquer la nacelle 4a sensiblement au centre du chariot manipulateur par arrêt de la motorisation, de façon à permettre son déplacement et la mise à niveau au poste de travail. Grâce à la position des barres d'entraînement 20 et 21, la nacelle est fermement maintenue durant toute la durée du déplacement et également lorsqu'elle est au niveau du poste de travail.

Pour le rangement de la nacelle, le chariot est positionné face à son compartiment de rangement et, selon le cas, le moto-réducteur 18 commande la rotation dans le même sens ou en sens inverse ; c'est-à-dire que l'on peut faire un transfert en continu ou un retour à la case départ par exemple. En cas de retour à la case départ, la barre d'entraînement 21 tire la nacelle 4a jusqu'à ce qu'elle s'escamote vers le bas en arrivant au niveau du pignon 11. La seconde barre 20 continue son déplacement et pousse la nacelle par butée sur l'aile interne 25 pour que cette nacelle soit prise en charge par les glissières 3. La poussée s'effectue jusqu'à ce que la barre d'entraînement 20 arrive au niveau du pignon 11. La nacelle est alors stockée et la rotation continue jusqu'à ce que les barres 20 et 21 retrouvent leur position de départ, respectivement au niveau des galets 10 et 9.

Les moyens d'extraction et de rangement de la nacelle sont identiques du côté des nacelles 4b et pour sortir cette nacelle de son rayonnage, la rotation est réalisée en sens inverse.

Dans le cas d'un transfert de nacelle "en continu", dans des rayonnages disposés de part et d'autre dudit chariot, la première barre cylindrique extrait la nacelle stockée, par engagement dans la poignée avant ; la seconde barre s'engage ensuite dans la poignée arrière et pousse la nacelle dans le rayonnage en vis à vis, lorsque la première barre se désengage de sa poignée. La nacelle passe ainsi d'un côté à l'autre du chariot, sans à-coup et sans nécessiter plusieurs cycles des moyens d'accrochage assujettis aux chaînes d'entraînement.

Pour les manipulations de charges particulièrement lourdes, les nacelles porte-charges 4 sont équipées de galets qui remplacent les guides 27 précédemment décrits.

Ces galets vont prendre appui sur les glissières 3, 24 des rayonnages ou du chariot ; ils vont faciliter le déplacement de la nacelle.

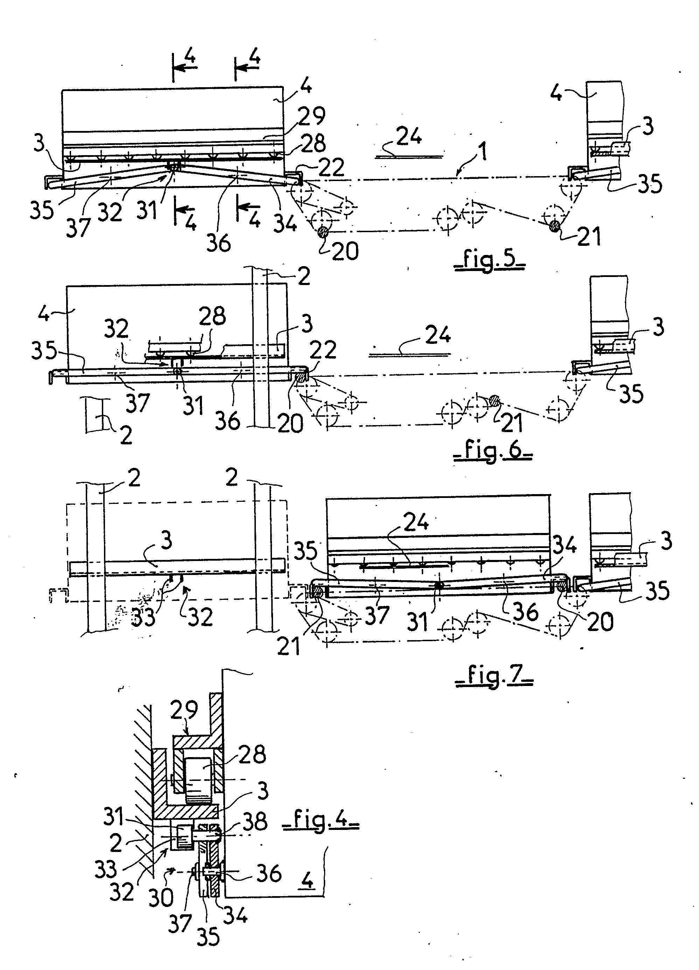

Dans le cadre d'une telle réalisation il est indispensable de prévoir des moyens de verrouillage des nacelles dans leur rayonnage de stockage. Ces différents moyens sont représentés figures 4 à 7.

Les figures 4 et 5 montrent la nacelle 4 équipée de galets 28 montés latéralement sur un support longitudinal 29. Les galets 28 sont disposés sur chaque flanc du porte-charges ; leur nombre est fonction de la longueur de ce dernier et des caractéristiques de l'installation.

Chaque rangée de galets 28 vient prendre appui sur une glissière 3 du bâti 2 du magasin. Lors de l'extraction des nacelles, les galets roulent sur les glissières 3 ainsi que sur les glissières 24 du chariot manipulateur.

Lorsqu'elles sont sur le chariot, les nacelles 4 sont prises en charge par les barres d'accrochage 20, 21 qui réalisent leur blocage et leur immobilisation, en vue de leur transfert.

Lorsqu'elles sont sur le rayonnage, il est prévu des moyens de verrouillage 30, destinés à les solidariser temporairement sur le bâti 2 et plus particulièrement sur les glissières 3.

Ces moyens d'immobilisation consistent en un ergot 31, solidaire de la nacelle, et qui vient s'encastrer dans une encoche de verrouillage 32 prévue sous les glissières 3. L'encoche 32 est constituée par deux butées en forme de plaques 33, soudées verticalement sensiblement au niveau de la partie médiane de la glissière 3.

La nacelle 4 est équipée, de chaque côté, de deux leviers 34 et 35 qui s'étendent latéralement, de part et d'autre de la partie médiane de la nacelle, jusqu'aux extrémités avant et arrière. Les deux leviers 34 et 35 sont articulés sur la nacelle, autour d'axes 36 et 37 respectivement ; leurs extrémités situées au niveau de la partie médiane de la nacelle sont solidarisées entre elles au moyen d'un axe 38. Cet axe 38 est soudé sur l'extrémité du levier 34 par exemple ; il traverse un orifice prévu sur le levier 35 et se termine par l'ergot de verrouillage 31.

Un léger jeu au niveau de l'une des articulations 36 et 37, permet aux leviers de tourner autour de leurs axes, et donc de commander le mouvement sensiblement vertical de l'ergot 31. La structure de ces moyens de verrouillage est telle que, en position repos, l'ergot 31 se situe en position haute ; des moyens de rappel en position haute ou des masselottes positionnées au niveau des extrémités libres des leviers, peuvent être prévus pour assurer ce positionnement.

Les moyens de verrouillage tels que décrits précédemment sont prévus de chaque côté des nacelles 4. Les extrémités libres des leviers 34 et 35 se situent au niveau d'une ligne horizontale qui passe par les poignées de préhension 22 des nacelles. On peut voir cette disposition figure 5.

Sur cette figure 5, la nacelle 4 est stockée dans le rayonnage ; son ergot 31 est bloqué dans l'encoche 32 des glissières. Le chariot manipulateur 1 est positionné devant la nacelle à manipuler.

La barre d'accrochage 20 peut se déplacer et pénétrer dans la poignée 22 pour extraire la nacelle 4 stockée (figure 6). Au cours de cette pénétration, la barre 20 entre en contact avec les leviers latéraux 34 ; elle provoque leur pivotement autour de l'axe 36 ce qui entraîne le désengagement de l'ergot 31 de son encoche 32. La nacelle n'est plus verrouillée et peut être extraite. Au cours de cette opération, le levier 35 a également été pivoté autour de son axe d'articulation 37. La nacelle complètement extraite est représentée figure 7 ; elle est bloquée sur le chariot 1 au moyen des deux barres d'accrochage 20 et 21.

La symétrie du système de verrouillage, au moyen des deux leviers 34 et 35, permet une manipulation à volonté de ces nacelles, d'un côté à l'autre du chariot, dans des rayonnages disposés en vis à vis.

Le verrouillage des nacelles dans leur rayonnage s'effectue par une opération inverse, lorsque ladite nacelle est correctement positionnée. La barre d'accrochage 20, 21 se désengage alors de la poignée 22 et libère progressivement le levier 34, 35 correspondant. Ces derniers ont tendance à reprendre leur position repos sous l'effet d'organes de rappel ou de masselottes, non représentés, et le galet 31 s'engage dans son encoche de verrouillage.

Les signes de référence insérés après les caractéristiques techniques mentionnées dans les revendications ont pour seul but de faciliter la compréhension de ces dernières et n'en limitent aucunement la portée.

## Revendications

1.- Chariot manipulateur de nacelles dans une installation de stockage, du type comportant des moyens de guidage et des moyens d'accrochage qui coopèrent avec des moyens de préhension (22) aménagés sur les nacelles (4), lesquels moyens d'accrochage sont entraînés par un système à chaînes sans fin synchronisées, disposées dans un plan vertical, symétriquement, de part et d'autre du plan médian de ladite nacelle (4) pour réaliser son extraction et son rangement, caractérisé en ce qu'il comporte, d'une part, deux chaînes sans fin (12, 13), chaque chaîne étant disposée latéralement, au-delà du gabarit frontal de la nacelle (4) et, d'autre part, des moyens d'accrochage en forme de barre disposés horizontalement entre les deux chaînes (12, 13), solidaires desdites chaînes sur une ligne tendue entre deux maillons en vis à vis sur chacune d'elles, pour se situer, en position active, dans le plan de traction des brins supérieurs (12a, 13a) desdites chaînes (12, 13).

2.- Chariot manipulateur de nacelles selon la revendication 1, caractérisé en ce qu il comporte deux barres horizontales (20, 21) coopérant chacune respectivement avec les moyens de préhension (22) disposés à l'avant et à l'arrière de la nacelle (4).

3.- Chariot manipulateur de nacelles selon la revendication 2, caractérisé en ce qu'il comporte deux barres (20, 21) disposées de façon à permettre, d'une part, le blocage et le centrage de la nacelle (4) sur le chariot et, d'autre part, le déplacement en continu de la nacelle, d'un côté à l'autre du chariot, dans des rayonnages disposés de part et d'autre du chariot.

4.- Chariot manipulateur de nacelles selon l'une quelconque des revendications 1 à 3, caractérise en ce que la ou les barres (20, 21) comportent des bagues de roulement (20a) à leur niveau d'accrochage sur les moyens de préhension (22) des nacelles (4).

5.- Chariot manipulateur de nacelles selon l'une quelconque des revendications 1 à 4, caractérisé en ce que les brins supérieurs (12a, 13a) des chaînes se situent latéralement, dans un plan situé au-dessus du fond de la nacelle (4) à prendre en charge.

6.- Nacelle pour installation de stockage comprenant un chariot selon l'une quelconque des revendications 1 à 5, caractérisée en ce qu'elle comporte des moyens de préhension en forme de deux poignées latérales (22) disposées sur chacune de ses faces avant et arrière, et dans l'encombrement de ces dernières.

7.- Nacelle selon la revendication 6, caractérisée en ce qu'elle comporte des galets (28) facilitant son déplacement, et des moyens de verrouillage dans le magasin de stockage.

8.- Nacelle selon la revendication 7, caractérisée en ce qu'elle comporte des moyens de verrouillage latéraux en forme d'ergot (31) supporté par au moins, un levier de commande (34, 35), articulé, lequel levier est lui-même actionné par les moyens d'accrochage en forme de barres (20, 21) du chariot manipulateur.

9.- Nacelle selon la revendication 8, caractérisée en ce qu'elle comporte, de chaque côté, un ergot (31) situé dans la partie médiane de la nacelle, lequel ergot est supporté par deux leviers de commande articulés (34, 35), chaque levier (34, 35) s'étendant respectivement vers les faces avant et arrière de la nacelle de façon à être actionné par les barres d'accrochage (20, 21), lorsqu'elles pénètrent ou sortent des poignées (22).

10.- Installation de stockage pour nacelle selon l'une quelconque des revendications 7 à 9, caractérisée en ce qu'elle comporte, sur les rails de guidage, des moyens en forme d'encoches (32) qui coopèrent avec des ergots (31) solidaires des nacelles, permettant le blocage desdits ergots et le verrouillage desdites nacelles.

fig. 1

fig. 2

_fig. 3a_

_fig. 3b_

_fig. 3c_

_fig.5_

_fig.6_

_fig.7_

_fig.4_

Office européen
des brevets

# RAPPORT DE RECHERCHE EUROPEENNE

Numero de la demande

EP  89 40 3637

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | US-A-4 358 239  (DECHANTSREITER)<br>* Colonne 3, ligne 40 – colonne 5, ligne 57; figures *<br>--- | 1,2 | B 65 G    1/04<br>B 66 F    9/14 |
| D,A | EP-A-0 136 189   (LAPOUYADE)<br>* Figures *<br>--- | 1,2,3 | |
| A | EP-A-0 192 259   (APPLIED RETRIEVAL TECHNOLOGY)<br>* Figures *<br>--- | 1,5 | |
| A | FÖRDERN UND HEBEN, vol. 38, no. 5, mai 1988, page 352; "Neue Greifeinheit für Kunststoff-Behälter"<br>* Figures *<br>----- | 1,6 | |

| | DOMAINES TECHNIQUES RECHERCHES (Int. Cl.5) |
|---|---|
| | B 65 G<br>B 66 F |

Le présent rapport a été établi pour toutes les revendications

| Lieu de la recherche | Date d'achèvement de la recherche | Examinateur |
|---|---|---|
| LA HAYE | 30-03-1990 | OSTYN T.J.M. |

EPO FORM 1503 03.82 (P0402)